# EUROPEAN PATENT APPLICATION

(11) **EP 4 503 080 A1**
(43) Date of publication of application: **05.02.2025**
(21) Application number: 23781139.3
(22) Date of filing: 16.01.2023
(51) Int. Cl.: H01H 31/08, H01H 31/06, H01H 9/24

(54) **CIRCUIT BREAKER HAVING IN-OUT INTERLOCK DEVICE**

(30) Priority: 31.03.2022 KR 20220040545
(71) Applicant: LS Electric Co., Ltd., Gyeonggi-do 14119 (KR)
(72) Inventor: KIM, Hakmin, Anyang-si, Gyeonggi-do 14118 (KR)
(74) Representative: K&L Gates LLP
(86) International application number: PCT/KR2023/000727
(87) International publication number: WO 2023/191277

(57) **Abstract**

The present invention relates to a circuit breaker having an in-out interlock device and, more specifically, to a circuit breaker having an in-out interlock device, which allows a switch of the circuit breaker to be switched to an off-state during transportation of a circuit breaker body. The circuit breaker having an in-out interlock device, according to an embodiment of the present invention, comprises: a cradle and a circuit breaker body drawing in and out the cradle; a shutter plate which is installed to be movable to the left and right on a transport device portion provided under the cradle; a pad lock member which is installed to be movable back and forth on the transport device portion and is restricted from moving or allowed to move according to the position of the shutter plate; and an interlock block which is installed on the transport device portion to be movable up and down, is moved up and down according to the position of the pad lock member, and is connected to an off-button of the circuit breaker body.

## Description

### Technical Field

The present disclosure relates to a circuit breaker having an in-out interlock device and, more particularly, to a circuit breaker having an in-out interlock device that allows a switch of the circuit breaker to be switched to an off-state during transportation of a circuit breaker body.

### Background Art

Generally, circuit breakers are electrical devices installed in a transmission or substation line or a part of an electric circuit to protect electrical facilities and loads by switching on or off the loads or breaking the electric circuit in a case of an accident such as a short circuit.

The circuit breakers include an opening/closing mechanism portion which enables to open/close a circuit portion, a detection mechanism unit configured to detect abnormal current, a trip mechanism unit configured to protect a line or a load by opening the opening/closing mechanism portion when abnormal current such as overcurrent, short circuit current, etc. occurs, an extinguishing unit configured to extinguish and cool an arc that occurs during cut-off, etc.

Among such circuit breakers, an air circuit breaker (ACB) is installed in low-voltage distribution lines and protects people and load equipment by systematically performing transmission/reception, switching, and stopping of low-voltage system power, as well as breaking a circuit when abnormal current such as overcurrent, a short circuit, a ground fault, etc. occurs by using air as an extinguishing medium.

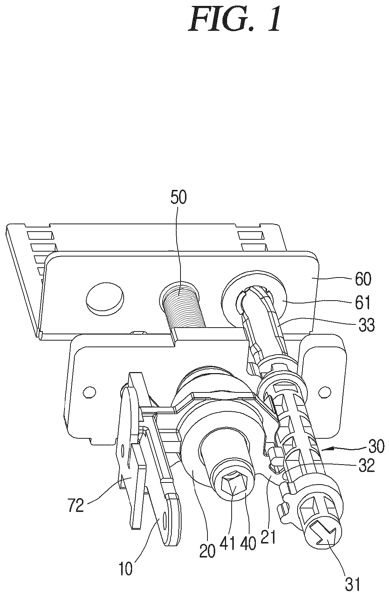

FIG. 1 is a perspective view illustrating a structure of an in-out device in a cradle of an air circuit breaker in the related art.

As illustrated in the drawing, the in-out device in the cradle of the air circuit breaker in the related art is configured to include a block 10 having a plate shape, a coupling 20 having a cylindrical shape and disposed integrally with the block 10, an indicator 30 rotatably disposed at one side of the coupling 20, a lever 40 rotatably inserted into the coupling 20, a screw 50 in contact with an end portion of the lever 40 and arranged inside the coupling 20 to be rotatably movable, and a supporter 60 connected to one end portion of the screw 50 and configured to move back and forth according to movement of the screw 50 to rotate the indicator 30 connected to one side.

The block 10 is a plate-shaped body with a rectangular form, and the coupling 20 is fixedly coupled to one side of the block 10.

The coupling 20 has the one side fixedly coupled to the block 10 and is configured to have a hollow cylindrical shape. The lever 40 is rotatably coupled to the coupling 20 in one direction and the screw 50 is rotatably coupled to the coupling 20 in another direction to rotate the screw 50 according to rotation of the lever 40.

A constraining protrusion 21 selectively in contact with the indicator 30 according to forward or backward movement of the coupling 20 to constrain rotational movement of the indicator 30 is disposed to protrude from one side of the coupling 20.

The indicator 30 is configured to have a cylindrical shape. A position indicator 31 is disposed on an end surface of the indicator 30 exposed to outside of the air circuit breaker, the position indicator 31 capable of indicating a position of a circuit breaker body (not shown) as the indicator 30 rotates according to a position of the circuit breaker body in the cradle (not shown). A constraining rail 32 is disposed on an outer circumferential surface of the indicator 30, wherein the constraining protrusion 21 of the coupling 20 is selectively coupled into the constraining rail 32 selectively according to forward and backward movement of the coupling 20.

The constraining rail 32 is configured to have a certain length so that the constraining protrusion 21 may be selectively coupled into the constraining rail 32 depending on a position of the circuit breaker body.

The indicator 30 having a camming surface 33 is disposed to extend from an end portion of the indicator 30 on which the constraining rail 32 is disposed. The camming surface 33 may have different angles relative to a horizontal plane and different lengths depending on a drawn-in position of the cradle.

For example, when the circuit breaker body is located between the drawn-in position and a disconnected position, an angle between the camming surface 33 and the horizontal plane is 0 degree, and when the circuit breaker body is located between the disconnected position and a test position, an angle between the camming surface 33 and the horizontal plane is defined at 45 degrees. In addition, when the circuit breaker body is located in a section between the test position and a connected position, an angle between the camming surface 33 and the horizontal plane is defined at 90 degrees.

As described above, a center of the supporter 60 is screwed to another end of the screw 50 so that the supporter 60 may move back and forth according to rotation of the screw 50. A cam holder 61 having the indicator 30 with the camming surface 33 inserted therein to rotate the indicator 30 according to back and forth movement of the supporter 60 is disposed on one side of the supporter 60.

Hereinafter, operation of moving the circuit breaker body within the cradle using this configuration is described.

When the lever 40 is rotated in an initial state in which the constraining protrusion 21 of the coupling 20 is separated from the constraining rail 32 of the indicator 30, the screw 50 connected to an end portion of the lever 40 is rotated. Then, as the supporter 60 moves backward by the rotation of the screw 50, the camming surface 33 of the indicator 30 moves along the cam holder 61, the circuit breaker body moves to the disconnected position, and thus, the position indicator 31 of the indicator 30 indicates the disconnected position.

To move the circuit breaker body from the disconnected position to the test position, the lever 40 is continuously rotated, then, the supporter 60 continues to move backwards and the camming surface 33 of the indicator 30 moves along the cam holder 61. Then, as the indicator 30 rotates by 45 degrees, the cradle moves to the test position, and the position indicator 31 of the indicator 30 indicates the test position.

To move the cradle from the test position to the connected position, the lever 40 is continuously rotated, then, the supporter 60 moves backwards and the camming surface 33 of the indicator 30 moves along the cam holder 61, and thus, the indicator 30 is rotated by 45 degrees and the position indicator 31 of the indicator 30 indicates the connected position. Then, as the cradle moves to the connected position, the cradle is completely drawn into the connected position and the constraining protrusion 21 is inserted into the constraining rail 32 to constrain rotational movement of the lever 40. Thus, the cradle does not further move.

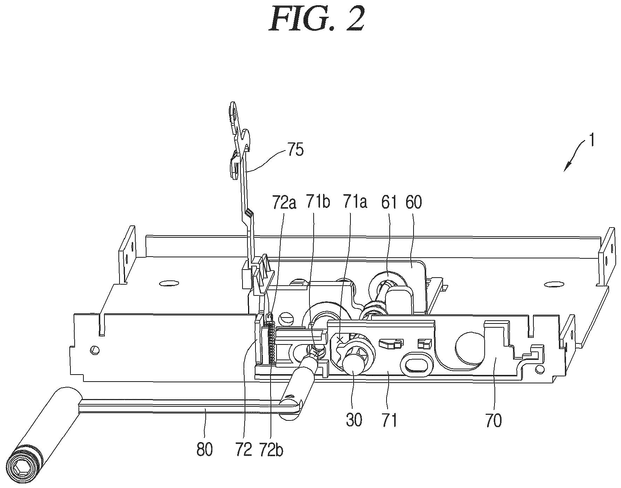

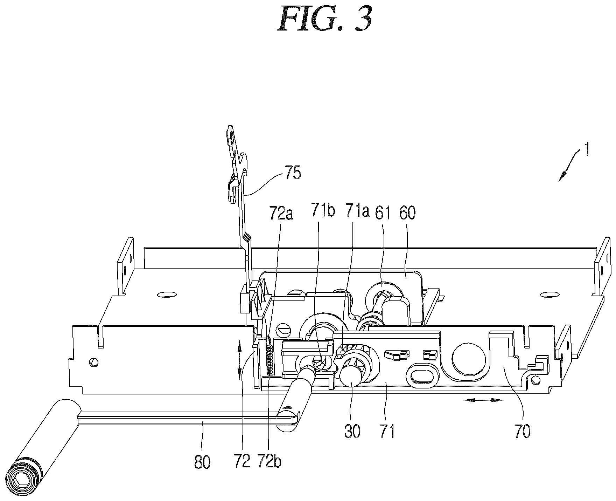

FIG. 2 is a perspective view illustrating a structure of the transport device portion in the cradle of the air circuit breaker in the related art. FIG. 3 is an operational diagram illustrating an operation of the transport device portion in the cradle of FIG. 2.

A shutter member 70 includes a shutter 71 disposed in front of the lever to be capable of performing reciprocating movement in left and right directions, and a plate 72 disposed on one side of the shutter 71 to constrain or allow movement of the shutter 71.

The shutter 71 is a plate-shaped member having a rectangular shape and has a plurality of holes disposed through a plate surface of the shutter 71. The indicator 30 is inserted into one side hole 71a and a handle 80 capable of rotating the screw 50 is inserted into another side hole 71b.

A fin 72a protruding to have a certain height along a thickness direction of the plate 72 is disposed on a plate surface of the plate 72, and an elastic spring 72b configured to provide elastic force to enable the plate 72 to move upward is disposed between the fin 72a and a lower surface.

The plate 72 is connected to the on/off switch (not shown) of the air circuit breaker through a connection link 75 to move up and down depending a state in which an on-/off-button (not shown) is pressed.

In this configuration, when the off-button of the air circuit breaker is pressed, as the plate 72 ascends by a certain distance, a constraint on movement of the shutter 71 in a left direction is released. Thus, the shutter 71 is caused to move in a left direction to thereby open the insertion hole 41 in the lever 40 to outside. Then, a user may draw the air circuit breaker out by inserting the handle 80 into the insertion hole 41 that is opened.

Conversely, when the on-button of the air circuit breaker is pressed, the plate 72 moves downward due to restoring force of the elastic spring 72b, and the shutter 71 cannot move to a left side. Thus, the insertion hole 41 disposed in the lever 40 is partially shielded. Accordingly, since a user cannot insert the handle into the insertion hole 41, the air circuit breaker cannot be drawn out in an on-state.

However, in the related art, the in-out handle 80 can be inserted only while the off-button of the air circuit breaker is being pressed. That is, the interlock device can operate only when the off-button is pressed, and then, the handle can be inserted. Further, since handle insertion work needs to be performed while the off-button is being pressed, it is difficult to use a product, and when a user is not familiar with a method of using the product, the product cannot be operated and may be damaged.

### Disclosure of Invention

### Technical Problem

Therefore, to obviate those problems, an aspect of the detailed description is to provide a circuit breaker having an in-out interlock device such that an interlock device may be easily used when a circuit breaker body is drawn into or out of a cradle, and the circuit breaker is switched to an off-state while the circuit breaker body is being drawn in or out.

### Solution to Problem

To achieve these and other advantages and in accordance with the purpose of the present disclosure, as embodied and broadly described herein, there is provided a circuit breaker having an in-out interlock device, the circuit breaker including: a cradle and a circuit breaker body drawn into or out of the cradle; a shutter plate installed to be movable left and right on a transport device portion disposed in a lower portion of the cradle; a pad lock member installed on the transport device portion to be movable back and forth, and restricted from moving or allowed to move according to a position of the shutter plate; and an interlock block installed on the transport device portion to be movable up and down, configured to move up and down according to a position of the pad lock member, and connected to an off-button of the circuit breaker body.

Here, a pad lock fixing portion caught on the pad lock member may be disposed on the shutter plate.

In addition, a pad lock fixing groove may be disposed on the pad lock member, and a fixing protrusion inserted into or separated from the padlock fixing groove may be disposed on the pad lock fixing portion.

In addition, an interlock guide portion caught on the interlock block may be disposed on the pad lock member.

In addition, the interlock guide portion may be configured as a groove.

In addition, a rolling member inserted into or separate from the interlock guide portion may be disposed on the interlock block, and an inclined portion in contact with the rolling member may be disposed on the interlock guide portion.

In addition, the rolling member may be configured as a roller or a bearing.

In addition, a vertical motion member disposed in the circuit breaker body to be movable up and down and configured to move due to the interlock block may be further included.

In addition, a switching member disposed in the circuit breaker body to be rotatably movable, configured to move due to the vertical motion member, and connected to the off-button may be further included.

### Advantageous Effects of Invention

In a circuit breaker having an in-out interlock device according to one embodiment of the present disclosure, an in-out handle may be inserted into an in-out screw without having to separately press the off-button. That is, when the circuit breaker body is moved, the circuit breaker body may switch to an off-state according to operation of an interlock device. Accordingly, there is no need to check whether the circuit breaker is in an off-state.

When a pad lock member is pressed in a state in which the in-out handle is inserted, the off-button is automatically pressed through the interlock block and the interlock connection member. Thus, the circuit breaker may be switched to the off-state.

When the in-out handle is not inserted, since the pad lock member is constrained by a shutter plate, the pad lock member cannot be pressed.

Once the pad lock member is pressed, the off-button remains in the off-state. Thus, the pad lock member does not need to be kept being pressed.

Accordingly, workability of a user may be improved, a product may be easily used, and a risk of product damage may be reduced.

### Brief Description of Drawings

FIG. 1 is a perspective view illustrating a structure of an in-out device of a transport device portion in a cradle of an air circuit breaker in the related art.
FIG. 2 is a perspective view illustrating a structure of the transport device portion in the cradle of the air circuit breaker in the related art.
FIG. 3 is an operational diagram illustrating an operation of an in-out interlock device in the transport device portion of FIG. 2.
FIGS. 4 and 6 are perspective views of an air circuit breaker according to one embodiment of the present disclosure.

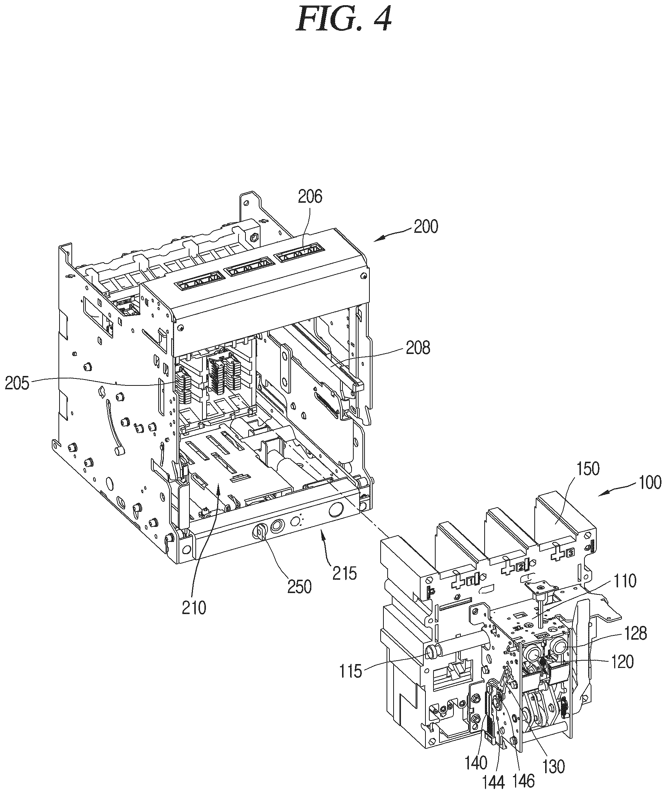

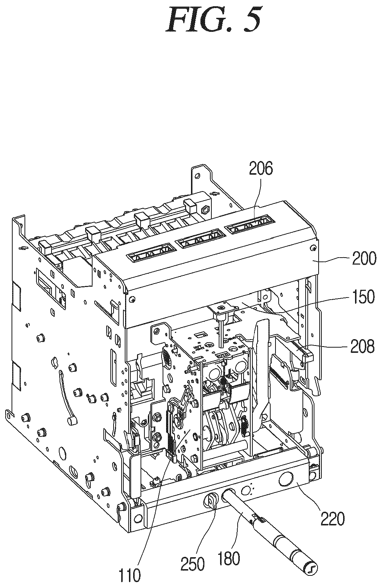

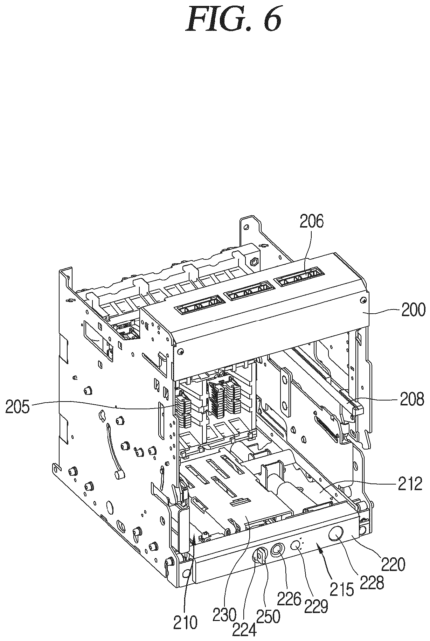

FIG. 4 illustrates a state in which a circuit breaker body is separate from a cradle. FIG. 5 illustrates a state in which the circuit breaker body is drawn into the cradle. FIG. 6 is a perspective view of the cradle. These drawings mainly illustrate configurations needed to understand the present disclosure, and other configurations are omitted.

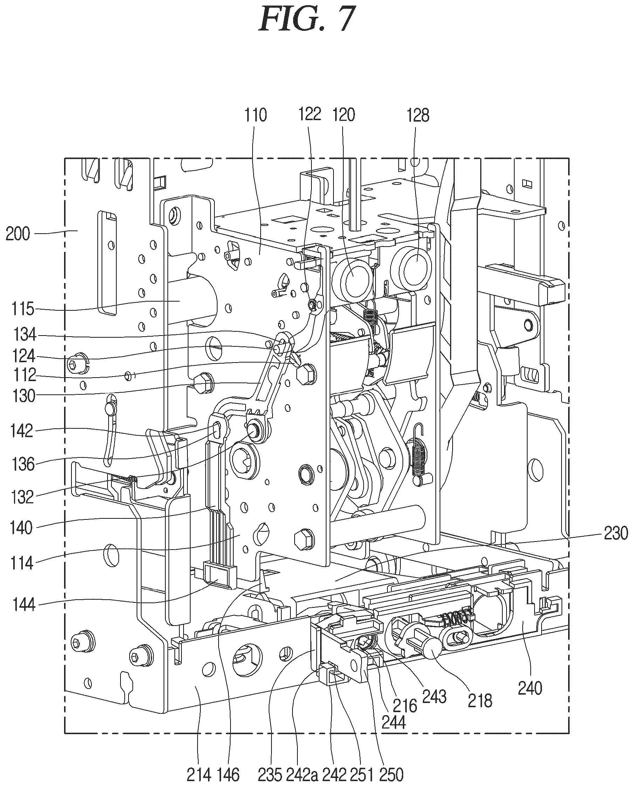

FIG. 7 is a partial perspective view illustrating a state in which the circuit breaker body is drawn into the cradle.

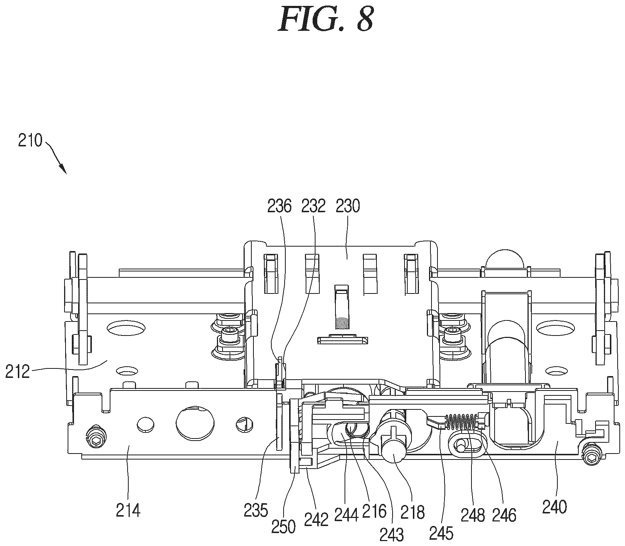

FIG. 8 is a perspective view of a transport device portion located in a lower portion of the cradle.

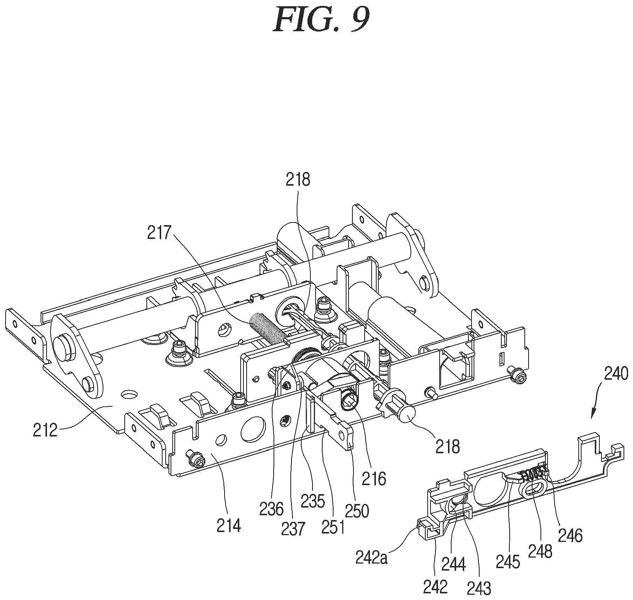

FIG. 9 is a perspective view illustrating the transport device portion of FIG. 8 from which a shutter plate is separated. This drawing illustrates a state in which a transport portion cover plate is removed.

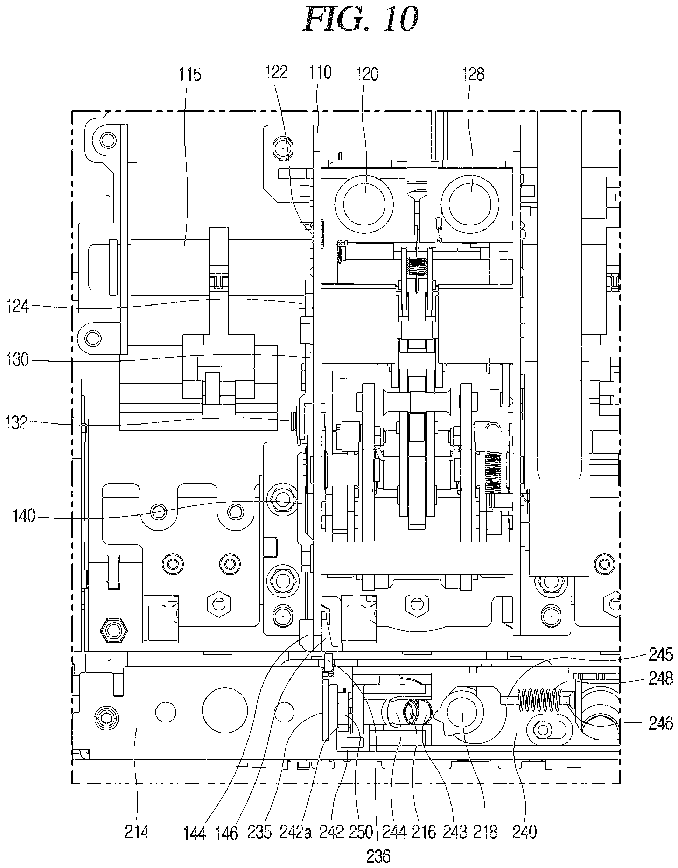

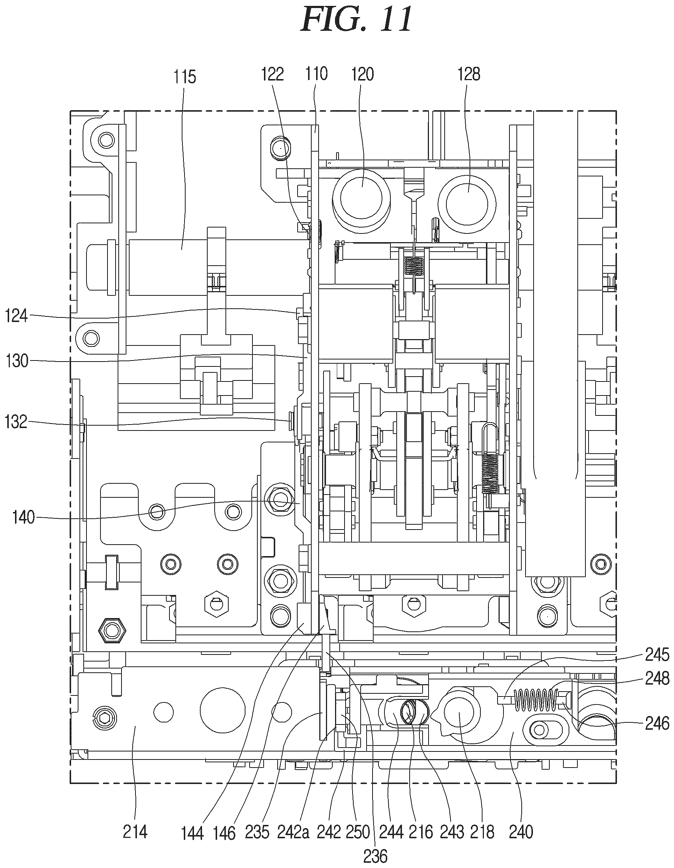

FIGS. 10 and 11 are configuration diagrams illustrating a front surface portion of the circuit breaker. FIG. 10 illustrates a state in which an off-button is not pressed. FIG. 11 illustrates a state in which an off-button is pressed.

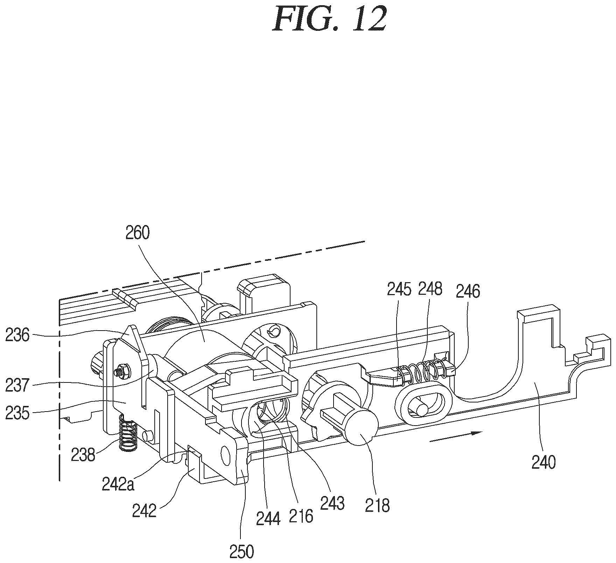

FIGS. 12 to 15 are operational diagrams illustrating a circuit breaker having an in-out interlock device according to one embodiment of the present disclosure. These drawings mainly illustrate an in-out manipulation assembly including an interlock device.

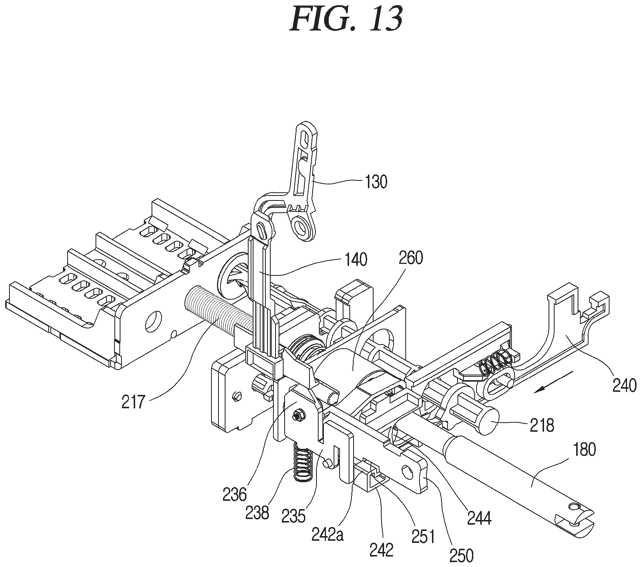

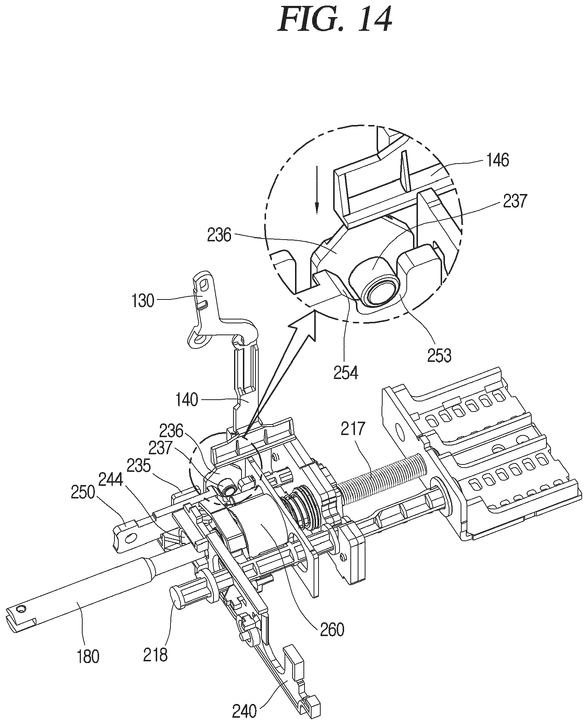

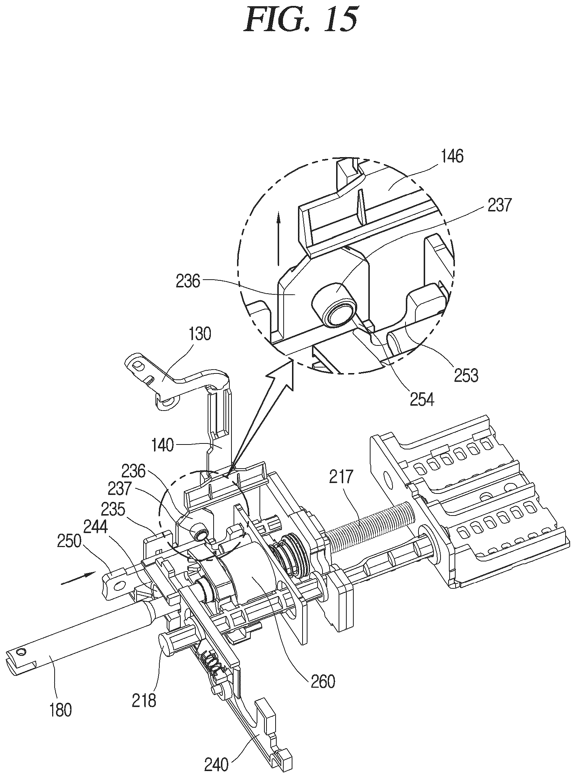

FIG. 12 illustrates a state in which a handle is not inserted. FIGS. 13 and 14 illustrate a state in which the handle is inserted. FIG. 15 illustrates a state in which a pad lock member is pressed.

### Mode for the Invention

Hereinafter, exemplary embodiments of the present disclosure are described with reference to the accompanying drawings. However, this is intended to provide a detailed description so that those of ordinary skilled in the art can easily implement the disclosure, and the technical idea and scope of the present disclosure are limited by the accompanying drawings.

The term "member," "unit," or "part" used herein is to indicate components in the present disclosure are not used for any purpose of limitation, and may be omitted.

A circuit breaker having an in-out interlock device according to respective embodiments of the present disclosure is to be described in detail with reference to the accompanying drawings. FIGS. 4 and 6 are perspective views of an air circuit breaker according to one embodiment of the present disclosure.

FIG. 4 illustrates a state in which a circuit breaker body is separate from a cradle. FIG. 5 illustrates a state in which the circuit breaker body is drawn into the cradle. FIG. 6 is a perspective view of the cradle. These drawings mainly illustrate configurations needed to understand the present disclosure, and other configurations are omitted.

FIG. 7 is a partial perspective view illustrating a state in which the circuit breaker body is drawn into the cradle.

A circuit breaker having an in-out interlock device according to one embodiment of the present disclosure includes: a cradle 200 and a circuit breaker body 100 drawn in and out of the cradle 200; a shutter plate 240 installed to be movable left and right on a transport device portion 210 disposed in a lower portion of the cradle 200; a pad lock member 250 installed on the transport device portion 210 to be movable back and forth, and restricted from moving or allowed to move according to a position of the shutter plate 240; and an interlock block 235 installed on the transport device portion 210 to be movable up and down, configured to move up and down according to a position of the pad lock member 250, and connected to an off-button 120 of the circuit breaker body 100. Here, when an in-out handle 180 is inserted into a shutter portion handle insertion hole 243 in the shutter plate 240, the shutter plate 240 may move to a left side and press the pad lock member 250.

FIGS. 4 to 6 illustrate the circuit breaker body 100 and the cradle 200. Here, internal structures of the circuit breaker body 100 and the cradle 200 may be viewed by illustrating only main components thereof, except for other components, to promote understanding of the essence of the present disclosure.

The circuit breaker body 100 includes a contact part (not shown), an opening/closing mechanism portion 110 configured to provide mechanical force to open/close the contact part, a trip portion, and an arc extinguishing portion 150.

The opening/closing mechanism portion 110 is equipped with an on-button 128 and an off-button 120 configured to opening and closing the contact part, respectively. When the on-button 128 or the off-button 120 is pressed, a main axis 115 rotates clockwise or counterclockwise by power of the opening/closing mechanism portion 110 to open or close the contact part. That is, a main circuit is blocked or electrically connected.

FIG. 7 is a detailed view of the off-button 120. The off-button 120 is installed to be rotatable relative to a rotation axis 122. When a user presses the off-button 120, the off-button 120 moves to lean backwards and rotates counterclockwise around the rotation axis 122 (when viewed from a left side in FIG. 7). The off-button 120 is equipped with a torsion spring to return to an original position when external force is removed.

A locking portion 124 is disposed to protrude on a lower end portion of the off-button 120. The locking portion 124 may be installed to protrude through a side surface of the opening/closing mechanism portion 110. An off-button operational hole 112 is disposed in one side surface of the opening and closing mechanism portion 110, and the locking portion 124 passes through the off-button operational hole 112 to extend outside the opening and closing mechanism portion 110. The locking portion 124 operates interlock connection members 130 and 140. Also, conversely, the interlock connection members 130 and 140 operate the off-button 120 by moving the locking portion 124.

The interlock connection members 130 and 140 are disposed on one side of the opening/closing mechanism portion 110. The interlock connection members 130 and 140 may be disposed on a side surface plate 114 of the opening/closing mechanism portion 110.

A switching member 130 (a first interlock connection member) is included. The switching member 130 transmits operation of the off-button 120 to a vertical motion member 140 (a second interlock connection member) or, conversely, transmits operation of the vertical motion member 140 to the off-button 120.

The switching member 130 performs rotational movement to switch rotational movement of the locking portion 124 of the off-button 120 into up and down movement of the vertical motion member 140, or switch up and down movement of the vertical motion member 140 into rotational movement of the locking portion 124 of the off-button 120. The switching member 130 may be configured to have a plate shape with two arms extending to be separate from each other at an appropriate angle with reference to a switching member rotation axis 132 disposed in a middle portion of the switching member 130.

A locking hole 134 is disposed in one end portion of the switching member 130. The locking portion 124 of the off-button 120 is inserted into the locking hole 134 to transmit movement of the off-button 120 to the switching member 130. The locking portion 124 operates the switching member 130 while performing certain sliding movement within the locking hole 134.

A hook 136 is disposed in another end portion of the switching member 130. Movement of the switching member 130 is transmitted to the vertical motion member 140 via the hook 136. An arm including the another end portion of the switching member 130 is bent in an arrow (arc) shape so that the hook 136 moves almost linearly in up and down directions.

The vertical motion member 140 is disposed to move up and down. The vertical motion member 140 may be inserted into a groove disposed at a lower end of a side surface portion of the opening/closing mechanism portion 110 to perform ascending movement.

A hook hole 142 into which the hook 136 of the switching member 130 is inserted is disposed in one end portion (an upper end portion) of the vertical motion member 140. The vertical motion member 140 moves up and down by receiving force of the hook 136 inserted into the hook hole 142.

An operational portion 144 is disposed in another end portion (a lower end portion) of the vertical motion member 140. The operational portion 144 may be inserted into a groove disposed at a lower end of a side surface portion of the opening/closing mechanism portion 110 to move up and down.

An operational plate 146 is disposed to protrude on the operational portion 144. Here, the operational portion 144 is disposed on an outer side of the side surface plate 114 of the opening/closing mechanism portion 110, and the operational plate 146 is installed to be disposed on an inner side of the side surface plate 114 of the opening/closing mechanism portion 110.

The operational plate 146 causes the interlock block 235 to move (see FIGS. 8 and 9). In addition, conversely, the movement of the interlock block 235 causes the vertical motion member 140 to move up and down via the operational plate 146.

When the off-button 120 is pressed, the off-button 120 rotates counterclockwise with reference to the rotation axis 122. In association with this, the switching member 130 rotates clockwise, and the vertical motion member 140 moves upward.

When force pressing the off-button 120 is removed, the off-button 120 rotates clockwise to return to an original position according to restoring force of the torsion spring, and in association with this, the switching member 130 rotates counterclockwise, and the vertical motion member 140 moves downward.

Meanwhile, when the vertical motion member 140 moves upward, the switching member 130 moves clockwise, and in association with this, the off-button 120 moves counterclockwise to be brought into a pressed state.

When the vertical motion member 140 moves downward, the switching member 130 moves counterclockwise, and in association with this, the off-button 120 moves clockwise to enter a non-pressed state.

**The** on-button 128 is disposed adjacent to the off-button 120. **The** on-button 128 operates the opening/closing mechanism portion 110 to perform a closed operation. In this case, the main circuit is electrically connected. When the closed operation of the opening/closing mechanism portion unit 110 occurs, a movable contactor of the contact part is in contact with a fixed contactor to carry current to the main circuit.

A safety device (not shown) is provided between the on-button 128 and the off-button 120 so that the on-button 128 does not operate when the off-button 120 is pressed. That is, the on-button 128 operates only when the off-button 120 is not pressed.

The cradle 200 is configured to have a box shape with an open front surface such that the circuit breaker body 100 is drawn into or out of the cradle 200. The cradle 200 supports the circuit breaker body 100 and allows the circuit breaker body 100 to move and fixed to a disconnected position, a test position, or an operating position (a service position and a connected position). The cradle 200 is connected to the main circuit and mediates a connection between the circuit breaker body 100 and the main circuit.

A cradle terminal 205 is disposed on a rear portion (a rear plate) of the cradle 200. The cradle terminal 205 includes a power side terminal and a load side terminal, and the power side terminal and the load side terminal are included for each phase. For example, in a case of a three-phase circuit breaker, three power-side terminals and three load-side terminals are provided.

An arc box (not shown) is disposed on an upper surface portion of the cradle 200. An arc gas flowing out of the arc extinguishing unit 150 of the circuit breaker body 100 is discharged to outside through the arc box.

A control power unit 206 may be disposed on an upper surface portion (an upper surface plate) of the cradle 200. The control power unit 206 may perform a maintenance operation such as testing a breaking operation, removing residual current, etc. when the cradle 200 and the circuit breaker body 100 are not connected to the main circuit.

Mechanisms configured to assist the circuit breaker body 100 to be drawn in or out may be installed on a side surface portion of the cradle 200. For example, a guide 208 may be disposed inside the side surface portion of the cradle 200.

The transport device portion 210 capable of supporting the circuit breaker body 100 and moving the circuit breaker body 100 simultaneously is disposed on a lower surface portion of the cradle 200.

FIGS. 8 and 9 illustrate the transport device portion 210. FIG. 8 illustrates a state in which a front surface cover plate 220 of a front surface manipulation portion 215 is removed. FIG. 9 illustrates a state in which a transport portion cover plate 230 is removed and a shutter plate 240 is separated.

The transport device portion 210 includes a base plate 212, the front surface manipulation portion 215, the transport portion cover plate 230, etc.

Hereinafter, the transfer device portion 210 is described briefly.

The base plate 212 constitutes a lower surface of the transport device portion 210.

The front manipulation portion unit 215 having the in-out handle 180 inserted therein may perform operations such as moving the circuit breaker body 100, displaying a position of the circuit breaker body 100, and restricting movement of the circuit breaker body 100.

The transport portion cover plate 230 protects an in-out device such as a screw, etc.

Hereinafter, the transport device portion 210 is described in detail.

The base plate 212 constitutes both a lower surface of the cradle 200 and a lower surface of the transport device portion 210. An in-out device is installed on an upper surface of the base plate 212 and the front manipulation portion 215 is disposed on a front surface of the base plate 212.

An in-out manipulation assembly (see FIGS. 12 to 15) is installed in a middle portion of the base plate 212. The in-out manipulation assembly includes an in-out screw 217 and a position indicating screw 218.

The in-out screw 217 configured to provide power to cause the circuit breaker body 100 to receive force of the in-out handle 180 and move back and forth is longitudinally disposed on a center portion, and the position indicating screw 218 is disposed beside the in-out screw 217 in parallel.

An insertion groove 216 having a polygonal shape (for example, hexagonal) is disposed at a front end of the in-out screw 217, and the in-out handle 180 may be inserted into the insertion groove 216 to provide power.

The front surface portion 214 of the base plate 212 is bent from a lower surface to an upper surface to constitute a front surface.

The front cover plate 220 is coupled to the front surface portion 214 of the base plate 212.

Various grooves are disposed in the front surface portion 214 of the base plate 212 to expose the in-out screw 217, the position indicating screw 218, etc.

The interlock block 235 is installed on the base plate 212. The interlock block 235 is illustrated in detail in FIGS. 12 to 15. The interlock block 235 is installed to be movable up and down. The interlock block 235 receives upward force from a block return spring 238. Therefore, in a normal state in which no external force is applied, the interlock block 235 is located in an ascending position.

A head portion 236 of the interlock block 235 protrudes above the transport portion cover plate 230 through a block operational hole 232 of the transport portion cover plate 230 (see FIG. 8).

The head portion 236 of the interlock block 235 is in contact with the operational plate 146 of the vertical motion member 140 (see FIGS. 10 and 11). Therefore, when the off-button 120 is pressed, the interlock block 235 ascends as the vertical motion member 140 ascends. When the off-button 120 returns to an original position, the interlock block 235 descends as the vertical motion member 140 descends.

FIGS. 10 and 11 illustrate a state in which the off-button 120, the switching member 130, the vertical motion member 140, and the interlock block 235 interoperate with each other. FIG. 10 illustrates a state in which, when the off-button 120 is not pressed, the vertical motion member 140 descends through the switching member 130 and the interlock block 235 descends. FIG. 11 illustrates a state in which, when the off-button 120 is pressed, the vertical motion member 140 ascends through the switching member 130, and the interlock block 235 ascends.

Conversely, when the interlock block 235 ascends, the vertical motion member 140 is pushed upward, and accordingly, the off-button 120 is pressed. In addition, when the interlock block 235 descends, the vertical motion member 140 descends according to the off-button 120 operating to return.

The interlock block 235 may be disposed to have a plate shape, and a part of the interlock block 235 protrudes toward a front of the front surface portion 214 of the base plate 212.

A rolling member 237 such as a roller, a bearing, etc. is disposed on one surface (a surface on which the pad lock member 250 is present) of the interlock block 235.

The pad lock member 250 is included as a component of the in-out manipulation assembly and the in-out interlock device. The pad lock member 250 is exposed on a front portion of the front control unit 215 and may be pressed by a user. The pad lock member 250 is illustrated mainly in FIGS. 12 to 15.

A pad lock fixing groove 251 is disposed on a lower surface of the pad lock member 250. A pad lock fixing portion 242 of the shutter plate 240 may be inserted into the pad lock fixing groove 251.

An interlock guide portion 253 is disposed on a middle portion of an upper surface of the pad lock member 250. The interlock guide portion 253 may be configured as a groove. When external force is not applied to the interlock guide unit 253 (when the off-button is not pressed), the interlock block 235 is in a descending state so that the rolling member 237 is inserted into the interlock block 235.

Through holes are disposed in the front cover plate 220 through which components of the front manipulation portion 215 may be exposed (see FIG. 6). For example, a pad lock insertion hole 224, a handle insertion hole 226, a handle storage hole 228, a position indicating screw hole 229, etc. are disposed in the front cover plate 220.

The shutter plate 240 is disposed on a rear surface of the front cover plate 220. When the front cover plate 220 is installed on the transport device portion 210, the shutter plate 240 is placed in front of the front surface portion 214 of the base plate 212 and installed to linearly move left and right along a surface of the front cover plate 220.

The pad lock fixing portion 242 is disposed in a lower left end portion of the shutter plate 240. The pad lock fixing part 242 may be disposed to extend at a lower left end of the shutter plate 240. A fixing protrusion 242a is disposed to protrude upward from the pad lock fixing portion 242.

When the shutter plate 240 moves, and the fixing protrusion 242a of the pad lock fixing portion 242 is inserted into the pad lock fixing groove 251 in the pad lock member 250, movement of the pad lock member 250 is restricted. When the fixing protrusion 242a of the pad lock fixing portion 242 deviates from the pad lock fixing groove 251 in the pad lock member 250, movement of the pad lock member 250 is allowed.

The shutter portion handle insertion hole 243 into which the in-out shutter handle 180 may be inserted is disposed through the shutter plate 240. Here, the shutter portion handle insertion hole 243 is configured to expose only a part of the insertion groove 216 in the in-out screw 217 in a normal state when external force is not exerted (see FIG. 8). That is, on the shutter plate 240, an insertion prevention portion 244 is disposed at a portion adjacent to the shutter handle insertion hole 243 (a left portion in the drawing). Insertion of the in-out handle 180 is restricted by the insertion prevention portion 244. When movement of the shutter plate 240 is restricted, that is, when the shutter plate 240 is moved to a right side, insertion of the in-out handle 180 is restricted, and thus, the circuit breaker body 100 cannot move.

Here, the insertion prevention portion 244 is disposed to have an inclined surface. The insertion prevention portion 244 is disposed to be inclined toward the shutter portion handle insertion hole 243. Therefore, in a case when movement of the shutter plate 240 is not restricted, when the insertion prevention portion 244 is pushed using the in-out handle 180, the shutter plate 240 moves to a left side to fully open the shutter portion handle insertion hole 243. Then, the in-out handle 180 may be inserted into the insertion groove 216 in the in-out screw 217 to transmit power.

A shutter return spring 248 is disposed to provide force to cause the shutter plate 240 to return to an original position. The shutter plate 240 is equipped with spring fixing portions 245 and 246 to install the shutter return spring 248. A part of the shutter return spring 248 is fixed to a part of a rear surface of the front cover plate 220. In a normal state in which external force is not applied, the shutter plate 240 moves to a right side to cover a part of the insertion groove 216. Therefore, the in-out handle 180 cannot be inserted, and the pad lock member 250 cannot move.

Referring mainly to FIGS. 12 to 15, operation of the circuit breaker having the in-out interlock device according to one embodiment of the present disclosure is described.

As illustrated in FIG. 12, when the in-out 180 is not inserted, the shutter plate 240 is in a state of being moved to a right side by force of the shutter return spring 248. Therefore, the fixing protrusion 242a of the shutter plate 240 is inserted into the pad lock fixing groove 251 of the pad lock member 250, and thus, cannot press the pad lock member 250. Therefore, when the in-out handle 180 is not inserted, the transport device portion 210 cannot be manipulated, and thus, the circuit breaker body 100 cannot be moved.

As illustrated in FIG. 13, when the insertion prevention portion 244 is pushed using the in-out handle 180, the shutter plate 240 moves to a left side due to the inclined surface disposed on the insertion prevention portion 244 of the shutter plate 240, and the fixing protrusion 242a deviates from the pad lock fixing groove 251. In this state, the pad lock member 250 may be pressed.

FIG. 14 illustrates the state of FIG. 13, as viewed from another side. When the off-button 120 is not pressed, since the vertical motion member 140 is in a descending state, the rolling member 237 of the interlock block 235 is inserted into the interlock guide portion 253 of the pad lock member 250.

Meanwhile, when the pad lock member 250 is not pressed even in a state when the in-out handle 180 is inserted, a clutch member 260 is not connected and power of the in-out handle 180 is not transmitted to the in-out screw 217. Thus, the circuit breaker body 100 does not move.

As illustrated in FIG. 15, when the pad lock member 250 is pressed, the interlock guide portion 253 equipped in the pad lock member 250 moves to be brought in contact with the rolling member 237, and the inclined portion 254 of the interlock guide portion 253 pushes up the rolling member 237 to cause the interlock block 235 to ascend. Accordingly, the vertical motion member 140 also ascends and the switching member 130 connected thereto performs rotational movement to switch the off-button 120 to a pressed state.

In this case, the pad lock member 250 moves the clutch member 260 backwards to transmit power of the in-out handle 180 to the in-out screw 217. As such, the pad lock member 250 needs to be pressed to transmit power of the an-out handle 180 to the in-out screw 217 so that the transport device portion 210 may move the circuit breaker body 100 forward and backward.

In a circuit breaker having an in-out interlock device according to one embodiment of the present disclosure, an in-out handle may be inserted into an in-out screw without having to separately press the off-button. That is, when the circuit breaker body is moved, the circuit breaker body may switch to an off-state according to operation of an interlock device. Accordingly, there is no need to check whether the circuit breaker is in an off-state.

When a pad lock member is pressed in a state in which the in-out handle is inserted, the off-button is automatically pressed through the interlock block and the interlock connection member. Thus, the circuit breaker may be switched to the off-state.

When the in-out handle is not inserted, since the pad lock member is constrained by a shutter plate, the pad lock member cannot be pressed.

Once the pad lock member is pressed, the off-button remains in the off-state. Thus, the pad lock member does not need to be kept being pressed.

Accordingly, workability of a user may be improved, a product may be easily used, and a risk of product damage may be reduced.

The embodiments described above are only examples of the optimum modes of practice for implementing the present disclosure, and it will be understood by one of ordinary skill in the art that various changes in form and details may be made therein without departing from the spirit and scope of the present disclosure. Accordingly, the embodiments described therein should be considered in a descriptive sense only and not for purposes of limitation. Therefore it will be understood that the scope of the technical idea of the present disclosure is not limited by these embodiments. That is, the scope of protection of the present disclosure should be interpreted in accordance with the appended claims, and all technical ideas within the scope will be construed as being included in the scope of the present disclosure.

### [Description of reference numerals]

100: Circuit breaker body
120: Off-button
128: On-button
130: Switch member
140: Vertical motion member
144: Operational portion
180: In-out handle
200: Cradle
210: Transport device portion
212: Base plate
215: Front manipulation portion
216: Insertion groove
217: In-out screw
218: Position indicating screw
220: Front cover plate
230: Transport portion cover plate
235: Interlock block
236: Head portion
237: Rolling member
238: Bloc, return spring
240: Shutter plate
242: Pad lock fixing portion
242a: Fixing protrusion
243: Shutter portion handle insertion hole
244: Insertion prevention portion
248: Shutter return spring
250: Pad lock member
251: Pad lock fixing groove
253: Interlock guide portion
254: Inclined portion

## Claims

1. A circuit breaker having an in-out interlock device, the circuit breaker comprising:
a cradle and a circuit breaker body drawn into or out of the cradle;
a shutter plate installed to be movable left and right on a transport device portion disposed in a lower portion of the cradle;
a pad lock member installed on the transport device portion to be movable back and forth, and restricted from moving or allowed to move according to a position of the shutter plate; and
an interlock block installed on the transport device portion to be movable up and down, configured to move up and down according to a position of the pad lock member, and connected to an off-button of the circuit breaker body.

2. The circuit breaker of claim 1, wherein a pad lock fixing portion caught on the pad lock member is disposed on the shutter plate.

3. The circuit breaker of claim 2, wherein a pad lock fixing groove is disposed on the pad lock member, and a fixing protrusion inserted into or separated from the padlock fixing groove is disposed on the pad lock fixing portion.

4. The circuit breaker of claim 1, wherein an interlock guide portion caught on the interlock block is disposed on the pad lock member.

5. The circuit breaker of claim 4, wherein the interlock guide portion is configured as a groove.

6. The circuit breaker of claim 5, wherein a rolling member inserted into or separate from the interlock guide portion is disposed on the interlock block, and
an inclined portion in contact with the rolling member is disposed on the interlock guide portion.

7. The circuit breaker of claim 6, wherein the rolling member is configured as a roller or a bearing.

8. The circuit breaker of claim 7, further comprising a vertical motion member disposed in the circuit breaker body to be movable up and down, and configured to move due to the interlock block.

9. The circuit breaker of claim 8, further comprising a switching member disposed in the circuit breaker body to be rotatably movable, configured to move due to the vertical motion member, and connected to the off-button.
